# EUROPEAN PATENT APPLICATION

(11) **EP 4 495 283 A1**
(43) Date of publication of application: **22.01.2025**
(21) Application number: 23770427.5
(22) Date of filing: 02.03.2023
(51) Int. Cl.: C22C 26/00, B22F 3/14, B82Y 30/00, C22C 1/05

(54) **AL-ND COMPOSITE MATERIAL**

(30) Priority: 16.03.2022 JP 2022041248
(71) Applicant: Daicel Corporation, Osaka-shi, Osaka 530-0011 (JP); OSAKA UNIVERSITY, Suita-shi Osaka 565-0871 (JP)
(72) Inventor: MAKINO, Yuto, Tokyo 108-8230 (JP); TANIGAKI, Kenichi, Suita-shi, Osaka 565-0871 (JP)
(74) Representative: Grünecker Patent- und Rechtsanwälte PartG mbB
(86) International application number: PCT/JP2023/007768
(87) International publication number: WO 2023/176469

(57) **Abstract**

The present invention provides an Al-ND-based composite material in which nanodiamond (ND) particles are dispersed in an aluminum (Al)-based metal matrix.

## Description

### Technical Field

The present invention relates to an Al-ND-based composite material.

### Background Art

Aluminum or aluminum alloys are widely used as structural materials for vehicles, buildings, and the like, mainly because aluminum or aluminum alloys have high strength per unit weight (specific strength). However, aluminum or aluminum alloys have lower strength per unit volume than steel, and thus research and development of aluminum alloys having higher strength are still in progress.

For example, Patent Document 1 discloses a composite material in which silicon carbide is dispersed in a metal matrix containing aluminum as the main component. However, because the composite material contains a large amount of silicon carbide, performance of the composite material is poor. Non-Patent Document 1 discloses a composite material in which nanodiamond obtained by a detonation method is dispersed in nickel.

### Citation List

### Patent Document

Patent Document 1: JP 6-184663 A

### Non-Patent Literature

Non-Patent Document 1: July 2019 Materials Performance and Characterization 9(4) DOI: 10.1520/MPC20190073

### Summary of Invention

### Technical Problem

The present invention aims to provide an aluminum-based composite material having high strength.

### Solution to Problem

The present invention provides the following aluminum-nanodiamond-based composite material (Al-ND-based composite material).
[1] An Al-ND-based composite material in which nanodiamond (ND) particles are dispersed in an aluminum (Al)-based metal matrix.
[2] The Al-ND-based composite material according to [1], in which the Al-based metal matrix is a pure Al matrix or an Al-based alloy matrix.
[3] The Al-ND-based composite material according to [2], in which an Al-based alloy is selected from the group consisting of an Al-Cu-Mg-based alloy, an Al-Mn-based alloy, an Al-Si-based alloy, an Al-Mg-based alloy, an Al-Mg-Si-based alloy, and an Al-Zn-Mg-based alloy.
[4] The Al-ND-based composite material according to any one of [1] to [3], in which an average size of primary particles of the ND particles is from 2 to 70 nm.
[5] The Al-ND-based composite material according to any one of [1] to [4], in which a proportion of the ND particles in the composite material is from 0.1 to 30 mass%.
[6] The Al-ND-based composite material according to any one of [1] to [5], in which the nanodiamond particles are detonation nanodiamond (DND) particles.

### Advantageous Effects of Invention

According to the present invention, the strength of Al-based metals such as pure aluminum (pure Al) or aluminum-based alloys (Al-based alloys) can be increased.

### Brief Description of Drawings

FIG. 1 shows the Vickers hardness (HV) of the pure aluminum containing the detonation nanodiamond (DND) particles after an SPS sintering and the Vickers hardness (HV) of the pure aluminum free of the detonation nanodiamond (DND) particles after an SPS sintering.
FIG. 2 shows the Vickers hardness (HV) of the aluminum-based alloy containing the detonation nanodiamond (DND) particles after an SPS sintering and the Vickers hardness (HV) of the aluminum-based alloy free of the detonation nanodiamond (DND) particles after an SPS sintering.
FIG. 3 shows the Vickers hardness (HV) of the aluminum-based alloy containing the detonation nanodiamond (DND) particles after an SPS sintering and a solution treatment and the Vickers hardness (HV) of the aluminum-based alloy free of the detonation nanodiamond (DND) particles after an SPS sintering and a solution treatment.

### Description of Embodiments

A composite material according to an embodiment of the present invention contains an Al-based metal and nanodiamond (ND) particles, and the ND particles are dispersed in an Al-based metal matrix. The Vickers hardness of the composite material according to an embodiment of the present invention is preferably higher than that of an ND particles-free Al-based metal material by 10% or greater, more preferably 20% or greater, and even more preferably 30% or greater. Examples of Al-based metals include pure Al and Al-based alloys.

Al-based metals can be divided into wrought materials and cast materials, and wrought materials and cast materials can each be further divided into non-heat-treatable alloys and heat-treatable alloys. A preferred Al-based alloy contains, in addition to Al, at least one element selected from the group consisting of Cu, Mg, Mn, Si, Zn, Fe, Cr, Ga, V, Ni, B, Zr, and Ti. Examples of a more preferred Al-based metal include pure aluminum (1050, 1060, 1070, 1080, 1085, 1100, 1100A, 1200, 1230A), Al-Cu-based metals (2011, 2014, 2017, 2024, 2117, 2018, 2218, 2618, 2219, 2025, 2032), Al-Mn-based metals (3003, 3203, 3004, 3104, 3005, 3105), Al-Si-based metals (4032, 4043), Al-Mg-based metals (5005, 5050, 5052, 5154, 5254, 5454, 5060, 5082, 5182, 5083, 5086, 5110A, 5041), Al-Mg-Si-based metals (6061, 6005C, 6063, 6101, 6151, 6262), Al-Zn-Mg-based metals (7072, 7075, 7475, 7050, 7204, 7003), and Al-Fe-based metals(8021, 8079), all of which are presented in Table 1.

### [Table 1]

### ▪ Typical Aluminum Alloys for Wrought Materials

| Alloy System | Alloy Designation | | Summary of Material Characteristics | Example of Application |
|---|---|---|---|---|
| | JIS | AA | | |
| Pure Aluminum-Based | 1060 | 1060 | This alloy is used as a conductive material with an IACS guarantee of 61%. 6101 is used when strength is required. | Bus bars, electric wires |
| | 1085 | 1085 | Because these are pure aluminum, they have a low strength but high thermal conductivity and high electrical conductivity, as well as good moldability, good weldability, and good corrosion resistance. | Daily necessities, name plates, lighting fixtures, reflectors, decorations, chemical industry containers, fins, welding wires, conductive materials, aluminum foil materials, printing plates |
| | 1080 | 1080 | | |
| | 1070 | 1070 | | |
| | 1050 | 1050 | | |
| | 1230A | 1230A | | |
| | (1N30) | | | |
| | 1100 | 1100 | These are general-purpose aluminum with an Al purity of 99.0% or greater. They are the same as those described above except that they appear to be slightly whitish after an anodizing treatment. | General utensils, fins, caps, building materials, heat exchanger parts |
| | 1200 | 1200 | | |
| | 1100A (1N00) | 1100A | This alloy has a strength slightly higher than that of 1100, as well as excellent moldability. Other characteristics are equivalent to those of 1100. | Daily necessities |
| Al-Cu-Based | 2011 | 2011 | This is a free-cutting alloy. It has excellent machinability and high strength, but inferior corrosion resistance. The 6262 alloy is used when corrosion resistance is required. | Volume axes, optical parts, screws |
| | 2014 | 2014 | These alloys have poor corrosion resistance due to their high Cu content, but are used as structural materials due to their high strength. These alloys can also be applied to forgings. | Aircraft, gears, hydraulic parts, hubs |
| | 2017 | 2017 | | |
| | 2024 | 2024 | | |
| | 2117 | 2117 | As a material for rivets that is crimped after solution treatment, this alloy has a decreased room temperature aging rate. | Rivets |
| | 2018 | 2018 | These are alloys for forging. These alloys have excellent forgeability and high temperature strength, so they are used for forgings that require heat resistance. These alloys have inferior corrosion resistance. | Cylinder heads, pistons, and VTR cylinders |
| | 2218 | 2218 | | |
| | 2618 | 2618 | This is an alloy for forging. This alloy has excellent high temperature strength, but inferior corrosion resistance. | Pistons, rubber molding dies, and general heat-resistant parts |
| | 2219 | 2219 | This alloy has high strength, excellent low and high temperature characteristics, and excellent weldability, but inferior corrosion resistance. | Low temperature containers, and aerospace equipment |
| | 2025 | 2025 | This is an alloy for forging. This alloy has good forgeability and high strength, but inferior corrosion resistance. | Propellers, magnetic drums |
| | 2032 (2N01) | 2032 | This is an alloy for forging. This alloy has heat resistance and high strength, but inferior corrosion resistance. | Aircraft engines, hydraulic parts |
| AL-Mn-Based | 3003 | 3003 | These alloys are about 10% stronger than 1100 and have excellent moldability, weldability, and corrosion resistance. | General utensils, fins, veneers, copier drums, marine materials |
| | 3203 | 3203 | | |
| | 3004 | 3004 | These alloys are stronger than 3003 and have excellent moldability and good corrosion resistance. | Aluminum can body, light bulb bases, roof plates, color aluminum |
| | 3104 | 3104 | | |
| | 3005 | 3005 | This alloy is about 20% stronger than 3003 and has relatively good corrosion resistance. | Building materials, color aluminum |
| | 3105 | 3105 | This alloy is slightly stronger than 3003, with other characteristics being similar to those of 3004. | Building materials, color aluminum, caps |
| Al-Si-Based | 4032 | 4032 | This alloy has excellent heat resistance and wear resistance, and has a small coefficient of thermal expansion. | Pistons, cylinder heads |
| | 4043 | 4043 | This alloy has good melt flow and has little solidification shrinkage. Sulfuric acid anodizing treatment gives it a natural gray color. | Welding wires, building panels, brazing leather |
| Al-Mg-Based | 5005 | 5005 | These alloys have a strength similar to that of 3003 and have good workability, weldability, and corrosion resistance. The finish after anodization is good,and their color matches well with the 6063 profile. | Interior and exterior of buildings, interior of vehicles, and interior of ships |
| | 5050 | 5050 | | |
| | 5052 | 5052 | This is the most typical alloy with medium strength that has good corrosion resistance, good weldability, and good moldability. In particular, it has high fatigue strength for its strength, and has excellent seawater resistance. | General sheet metal, ships, vehicles, buildings, can ends, and honeycomb cores |
| | 5154 | 5154 | This alloy is about 20% stronger than 5052. Other characteristics are similar to those of 5052. | Similar to 5052. Pressure vessels |
| | 5254 | 5254 | This is an alloy that has a smaller elemental impurity limits than 5154 and inhibits the decomposition of hydrogen peroxide. Other characteristics are equivalent to those of 5154. | Hydrogen peroxide containers |
| | 5454 | 5454 | This alloy is about 20% stronger than 5052. Its characteristics are almost equivalent to those of 5154, but it has better corrosion resistance than 5154 in harsh environments. | Automobile wheels |
| | 5056 | 5056 | This alloy has superior corrosion resistance, good surface finishing by cutting processing, and good anodizing treatment and dyeing properties thereof. | Camera bodies, communication machine components, and zippers |
| | 5082 | 5082 | This alloy has strength close to that of 5083, and has good moldability and corrosion resistance. | Can ends |

| Alloy System | Alloy Designation | | Summary of Material Characteristics | Examlpes of Application |
|---|---|---|---|---|
| | JIS | AA | | |
| Al-Mg-Based | 5182 | 5182 | The strength of this alloy is about 5% higher than that of 5082, and other characteristics are equivalent to those of 5082. | Can ends |
| | 5083 | 5083 | This is an alloy for welded structures. It is the strongest corrosion-resistant alloy among practical non-heat-treatable alloys and is suitable for welded structures. It has good seawater resistance and low-temperature characteristics. | Ships, vehicles, low-temperature containers, and pressure vessels |
| | 5086 | 5086 | This alloy has a strength higher than that of 5154, and is a non-heat-treatable alloy for welded structures with good seawater resistance. | Ships, pressure vessels, and magnetic disks |
| | 5110A (5N01) | 5110A | The strength of this alloy is equivalent to that of 3003. An anodizing treatment after a bright treatment gives it high brightness. This alloy also has good moldability and corrosion resistance. | Kitchenware, cameras, decorations, and name plates |
| | 5041 (5N02) | 5041 | This is an alloy used for rivets and has good seawater resistance. | Rivets |
| Al-Mg-Si-Based | 6061 | 6061 | This is a corrosion-resistant alloy of the heat-treatable type. T6 treatment can give this alloy considerably high yield strength, but the strength of welded joints is low. Therefore, this alloy is used for bolts and rivet structures. | Ships, vehicles, onshore structures, pressure vessels |
| | 6005C (6N01) | 6005C | This is a medium-strength alloy for extrusion. This alloy has strength between those of 6061 and 6063, excellent extrudability, and press quenching performance, and can be used for large, thin profiles with complex shapes. This alloy also has good corrosion resistance and weldability. | Vehicles, onshore structures, ships |
| | 6063 | 6063 | This is a typical alloy for extrusion. Although the strength is lower than that of 6061, the extrudability is excellent. This alloy can yield a profile having a complicated cross-sectional shape, and has good corrosion resistance and surface treatability. | Buildings, guardrails, railings, vehicles, furniture, home appliances, decorations |
| | 6101 | 6101 | This alloy is a high-strength conductive material. The IACS guarantee is 55%. | Bus bars, electric wires |
| | 6151 | 6151 | This alloy has particularly excellent forging workability, corrosion resistance, and surface treatability, making it suitable for complex forgings. | Machines, automobile parts |
| | 6262 | 6262 | This is a corrosion-resistant free-cutting alloy. The corrosion resistance and surface treatability are much better than those of 2011, and the strength is equivalent to that of 6061. | Camera bodies, vaporizer parts, brake parts, gas appliance parts |
| Al-Zn-Mg-Based | 7072 | 7072 | This alloy has a low electrode potential and is mainly used as a corrosion-resistant cladding material, but can also be applied to heat exchanger fins utilizing sacrificial anodic action. | Cladding material of aluminum alloy cladding material, and fins |
| | 7075 | 7075 | This is one of the aluminum alloys with the highest strength, but its corrosion resistance is inferior. Cladding with 7072 improves the corrosion resistance, but the cost is high. | Aircraft, ski poles |
| | 7475 | 7475 | This is an alloy with an improved fracture toughness made by highly purifying 7075 to reduce the amount of Fe and Si. Superplasticity is developed by applying a special thermo-mechanical treatment. | Aircraft |
| | 7050 | 7050 | This is an alloy that has improved hardenability of 7075 and has excellent resistance to stress corrosion cracking. It is suitable for thick plates and forgings. | Aircraft, high-speed rotating body |
| | 7204 (7N01) | 7204 | This is an alloy for welded structures. The strength of this alloy is high, and the strength of the welded portion recovers to a level close to that of the base material when left at room temperature. The corrosion resistance is also quite good. | Vehicles, other onshore structures, and aircraft |
| | 7003 | 7003 | This is an extruded alloy for welded structures. Although the strength is slightly lower than that of 7N01, this alloy has good extrudability and yields large-sized thin profiles. Other characteristics are almost the same as those of 7N01. | Vehicles, motorcycle rims |
| Al-Fe-Based | 8021 | 8021 | This is an alloy for foils imparted with a high strength that is equal to or greater than that of 1230A (1N30), elongation, and foil rollability by containing a high amount of Fe. | Packaging, telecommunications |
| | 8079 | 8079 | This is an alloy for foils imparted with a strength that is equal to or greater than that of 1230A (1N30), elongation, and foil rollability by containing Fe and Si. | Packaging, telecommunications |

In the present specification, nanodiamond particles produced by a detonation method may be referred to as "detonation nanodiamond particles" or "DND particles".

In addition to the DND particles, ND particles synthesized by a high-temperature high-pressure method, a chemical vapor deposition method, an impact compression method, an implosion method, or a cavitation method, or ND particles obtained by pulverizing bulk-size diamond synthesized by the above-described methods can be used as the ND particles used in the present invention. The ND particles are preferably DND particles.

The proportion of the ND particles in the Al-ND-based composite material is preferably from 0.1 to 30 mass%.

The average size of primary particles of the ND is preferably from 2 to 70 nm, more preferably from 2.5 to 60 nm, even more preferably from 3 to 55 nm, and particularly preferably from 3.5 to 50 nm. The average size of the primary particles can be determined by Scherrer equation based on the analysis result of the powder X-ray diffractometry (XRD). Examples of a measurement instrument of XRD include the Multipurpose X-ray Diffraction System with Built-in Intelligent Guidance (available from Rigaku Corporation).

The peak area ratio of sp²-carbon to sp³-carbon (sp²-carbon/sp³-carbon) of the DND particles is preferably from 0.01 to 7 or from 0.05 to 3, preferably from 0.1 to 1.2, from 0.1 to 0.5 is more preferable than from 0.1 to 1, and even more preferably from 0.1 to 0.3. The peak area ratio can be determined by microscopic Raman spectroscopy using, for example, a 325-nm laser and a microscopic Raman spectrometer. The peak area of sp²-carbon refers to the total area of two peaks that appear near 1250 cm⁻¹ and 1328 cm⁻¹, and the peak area of sp³-carbon refers to the total area of two peaks that appear near 1500 cm⁻¹ and 1590 cm⁻¹. Examples of the microscopic Raman spectrometer that can be used include LabRAM HR Evolution (available from Horiba, Ltd.), a microscopic laser Raman spectrometer.

The explosive for producing the DND particles is not limited, and known explosives of wide varieties can be used. Specific examples thereof include trinitrotoluene (TNT), cyclotrimethylene trinitramine (hexogen, RDX), cyclotetramethylene tetranitramine (octogen), trinitrophenyl methylnitramine (tetryl), pentaerythritol tetranitrate (PETN), tetranitromethane (TNM), triamino-trinitrobenzene, hexanitrostilbene, and diaminodinitrobenzofuroxan. One type of these can be used alone, or a combination of two or more types of these can be used.

In an embodiment, the detonation nanodiamond particles of the present invention have a positive or negative zeta potential. The zeta potential of the detonation nanodiamond particles is preferably -70 mV or greater or 70 mV or less, and more preferably -60 mV or greater or 30 mV or less. In a preferred embodiment of the present invention, the detonation nanodiamond has a zeta potential of preferably from -70 to 70 mV, and more preferably from -60 to 30 mV.

When the ND particles according to an embodiment of the present invention are dispersed in water at a concentration of 3 mass%, the pH is preferably from 1 to 12. The shape of the ND particles according to an embodiment of the present invention is not limited, but is preferably, for example, spherical, ellipsoidal, or polyhedral.

The BET specific surface area of the ND particles according to an embodiment of the present invention is preferably from 20 to 900 m²/g, from 25 to 800 m²/g, from 30 to 700 m²/g, from 35 to 600 m²/g, from 50 to 500 m²/g, or from 100 to 400 m²/g, and more preferably from 200 to 300 m²/g. The BET specific surface area can be measured by nitrogen adsorption. Examples of a measurement instrument for the BET specific surface area include BELSORP-mini II (available from Microtrac BEL). The BET specific surface area can be measured under the following conditions, for example.
- Measured powder amount: 40 mg
- Preliminary drying: treated at 120°C for 3 hours in a vacuum.
- Measurement temperature: -196°C (liquid nitrogen temperature)

The DND particles, which are the preferred ND particles, can be a detonation crude product containing soot, but are preferably DND obtained by subjecting the detonation crude product to an acid treatment to remove sp²-carbon and metal impurities. The acid-treated DND may be further subjected to an alkali treatment, an annealing treatment, a gas-phase oxidation treatment, or the like. The acid treatment of the detonation crude product is preferably a mixed acid treatment using concentrated sulfuric acid and concentrated nitric acid. The amount of the acid used in the acid treatment is approximately from 5 to 48 parts by mass per 1 part by mass of the detonation crude product. The acid used in the acid treatment is preferably a strong acid and/or an acid having oxidizing properties, and examples thereof include hydrochloric acid, sulfuric acid, nitric acid, fuming sulfuric acid, fuming nitric acid, chromic acid, chromic anhydride, dichromic acid, permanganic acid, and perchloric acid. One or more of these acids may be used. An example of a more preferred acid is a mixed acid of concentrated sulfuric acid and concentrated nitric acid mixed in the ratio (volume ratio) of approximately 1 to 1. The temperature for the acid treatment is from 50 to 200°C, and the duration of the acid treatment is from 0.5 to 24 hours.

Alkali metal hydroxides such as sodium hydroxide and potassium hydroxide can be used in the alkali treatment. The temperature of the alkali treatment is from 30 to 150°C, and the duration of the alkali treatment is from 0.5 to 24 hours. The gas-phase oxidation treatment can be carried out at from 250 to 650°C for from 0.5 to 20 hours. The annealing temperature is preferably 800°C or higher, and the annealing time is 30 minutes or longer.

In the Al-ND-based composite material according to an embodiment of the present invention, the ND particles are preferably uniformly dispersed in the Al-based metal matrix. Such a composite material can be produced by mixing an Al-based metal powder and the ND particles, molding the mixture, and sintering the molded product. The Al-ND-based composite material may be a sintered compact, or may be a solution-treated product obtained by heat-treating the sintered compact in an atmosphere furnace and further cooling the sintered compact. The Al-based metal powder and the ND particles can be mixed using, for example, a ball mill, an attritor, a vibration mill, or the like. The molding can be performed by die molding, pressure molding such as rubber press molding, injection molding, or the like. The sintering can be performed by an air firing method, a hot press method, a spark plasma sintering (SPS) method, or the like. The sintering temperature is, for example, from 400 to 600°C, and the sintering duration is, for example, from 5 to 60 minutes. A milling aid may be used when mixing the Al-based metal powder and the ND particles. Examples of the milling aid include higher fatty acids such as stearic acid, palmitic acid, oleic acid, and linoleic acid; alcohols such as methanol, ethanol, propanol, butanol, and ethylene glycol; and inorganic fine particles such as those of glass and quartz. When the milling aid is used, it can be used in an amount of preferably from 0.1 to 3 mass%, more preferably from 0.5 to 2.5 mass%, and even more preferably from 1 to 2 mass% of the Al-based metal powder.

The average particle size of the Al-based metal powder to be mixed with the ND particles is preferably from 0.1 to 1000 µm, and more preferably from 1 to 100 µm. The average particle size of the Al-based metal powder can be determined by a light scattering method.

### Examples

Hereinafter, the present invention will be described more specifically with reference to examples, but the present invention is not limited by these examples.

### Example 1

A 99.9% aluminum powder (Al powder) having an average particle size of 30 µm and a detonation nanodiamond (DND) powder were used as starting materials. 10 g of pure aluminum powder, 0.1 g (1 mass%) of the DND powder, and also 0.2 g (2 mass%) of stearic acid serving as a milling aid were weighed using an electronic balance. Tungsten carbide balls (20 balls having a diameter of 10 mm and 50 balls having a diameter of 5 mm) were placed into a tungsten carbide container, and the above-described powders were placed from above the balls. The container was sealed, and the inside of the container was evacuated by a vacuum pump. Then, the atmosphere inside the container was replaced with an argon atmosphere. The container was placed in a planetary ball mill "P-6 classic line", available from FRITSCH, and a mechanical milling (MM) treatment was performed at a rotation speed of 300 rpm for 3 hours. For comparison, a powder with no DND added was subjected to the treatment in the same manner. Hereinafter, the DND-free Al powder is referred to as the pure Al sample, and the DND-containing powder is referred to as the pure Al + DND sample.

The pure Al powder and pure Al + DND powder after 3 hours of the MM treatment were sintered using a spark plasma sintering (SPS) method. The sintering conditions were as follows. The die (having an outer diameter of 30 mm and an inner diameter of 10 mm) and the punch (having a diameter of 10 mm) used were made of graphite. 2.0 g of each of the powders which had been subjected to the MM treatment was weighed using an electronic balance, placed in a die and sealed therein, and sintered. The sintering atmosphere was set to vacuum. The maximum load pressure was set to 50 MPa. Heating by pulse electric-current was performed for 8 min from room temperature to 400°C (50°C/min), for 4 min to 500°C (25°C/min), and for 5 min to 550°C (10°C/min). The maximum temperature reached was 550°C, and the pressurization holding time was 15 min. The relative densities of the samples after sintering ranged from 99.0 to 101.0%. However, the ideal densities were 2.70 g/cm³ for pure Al and 2.71 g/cm³ for pure Al + DND.

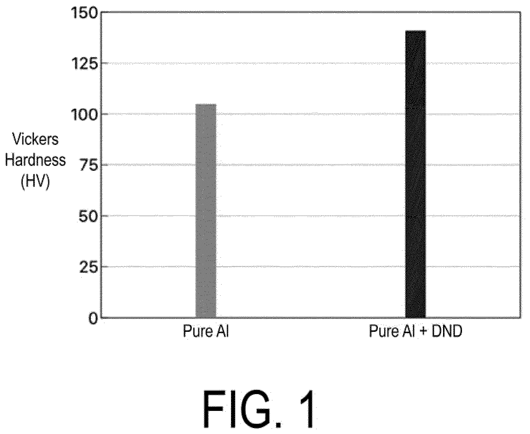

The surfaces of the sintered compacts yielded by the SPS method were mirror-finished by emery polishing (#2000) and buffing (with a diamond abrasive of 3 µm and an alumina abrasive of 0.3 µm). A surface observation using an optical microscope revealed a dense microstructure with an average grain size of approximately 15 µm in the pure Al sintered compact and a lamellar microstructure in the pure Al + DND sintered compact. After the observation, a Vickers hardness test was performed using a hardness tester (HMV-G31FA-S-HC, Shimadzu Corporation) (FIG. 1).

As shown in FIG. 1, the Vickers hardnesses after SPS sintering were 105 HV for the pure Al sample and 141 HV for the pure Al + DND sample. The hardness of the pure Al sintered compact was increased by approximately 34% by the addition of 1 mass% of DND. The first reason for this result may be that, as initially expected, the DND was incorporated into a particle of pure Al and acted as strengthening particles. The second reason may be that DND inhibited grain growth during the MM treatment and/or SPS sintering, and the resulting grain refinement led to strengthening.

### Example 2

An A7075 alloy powder having an average particle size of 30 µm and the DND powder were used as starting materials. 10 g of the A7075 alloy powder, 0.1 g (1 mass%) of the DND powder, and also 0.2 g (2 mass%) of stearic acid serving as a milling aid were weighed using an electronic balance. Tungsten carbide balls (20 balls having a diameter of 10 mm and 50 balls having a diameter of 5 mm) were placed into a tungsten carbide container, and the above-described powders were placed from above the balls. The container was sealed, and the inside of the container was evacuated by a vacuum pump. Then, the atmosphere inside the container was replaced with an argon atmosphere. The container was placed in a planetary ball mill "P-6 classic line", available from FRITSCH, and a mechanical milling (MM) treatment was performed at a rotation speed of 300 rpm for 3 hours. For comparison, a powder with no DND added was subjected to the treatment in the same manner. Hereinafter, the DND-free powder is referred to as the A7075 sample, and the DND-containing powder is referred to as the A7075 + DND sample.

The A7075 powder and the A7075 + DND powder after 3 hours of the MM treatment were sintered using an SPS method. The sintering conditions were as follows. The die (having an outer diameter of 30 mm and an inner diameter of 10 mm) and the punch (having a diameter of 10 mm) used were made of graphite. 2.0 g of each of the powders which had been subjected to the MM treatment was weighed using an electronic balance, placed in a die and sealed therein, and sintered. The sintering atmosphere was set to vacuum. The maximum load pressure was set to 50 MPa. Heating by pulse electric-current was performed for 8 min from room temperature to 400°C (50°C/min), for 4 min to 500°C (25°C/min), and for 5 min to 550°C (10°C/min). The maximum temperature reached was 550°C, and the pressurization holding time was 15 min. The relative densities of the samples after sintering ranged from 100.0 to 101.0%. However, the ideal densities were 2.80 g/cm³ for A7075 and 2.81 g/cm³ for A7075 + DND.

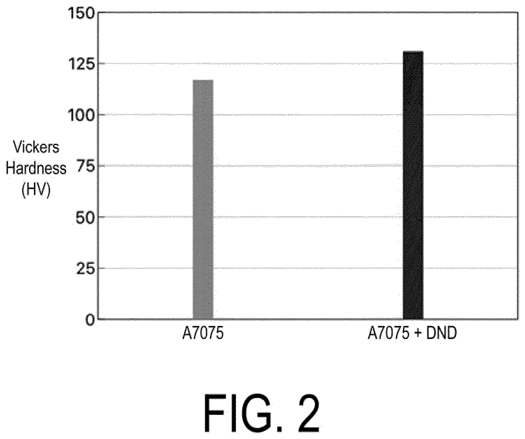

The surfaces of the sintered compacts yielded by the SPS method were mirror-finished by emery polishing (#2000) and buffing (with a diamond abrasive of 3 µm and an alumina abrasive of 0.3 µm). A surface observation using an optical microscope revealed a dense microstructure with an average grain size of approximately 10 µm in the A7075 sintered compact and a lamellar microstructure in the A7075 + DND sample. After the observation, a Vickers hardness test was performed using a hardness tester (HMV-G31FA-S-HC, Shimadzu Corporation) (FIG. 2).

As shown in FIG. 2, the Vickers hardnesses after SPS sintering were 117.7 HV for the A7075 sample and 130.9 HV for the A7075 + DND sample. The hardness of the A7075 sintered compact was increased by approximately 11% by the addition of 1 mass% of DND. The first reason for this result may be that, as initially expected, the DND was incorporated into a particle of A7075 and acted as strengthening particles. The second reason may be that DND inhibited grain growth during the MM treatment and/or SPS sintering, and the resulting grain refinement led to strengthening.

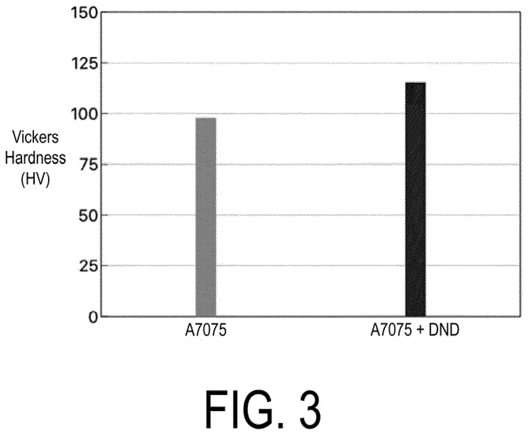

Next, the sintered compacts were held at 500°C for 1 hour in an atmosphere oven (Fulltech Inc., FT 101), taken out, and immediately water-cooled to perform a solution treatment (FIG. 3). As shown in FIG. 3, the Vickers hardnesses after the solution treatment were 97.9 HV for the A7075 sample and 115.6 HV for the A7075 + DND sample. Due to the solution treatment, the precipitation strengthening phase in an alloy redissolves in the matrix and softens. However, due to the addition of the DND, the strengthening effect was maintained even after the solution treatment.

## Claims

1. An Al-ND-based composite material in which nanodiamond (ND) particles are dispersed in an aluminum (Al)-based metal matrix.

2. The Al-ND-based composite material according to claim 1, wherein the Al-based metal matrix is a pure Al matrix or an Al-based alloy matrix.

3. The Al-ND-based composite material according to claim 2, wherein an Al-based alloy is selected from the group consisting of an Al-Cu-Mg-based alloy, an Al-Mn-based alloy, an Al-Si-based alloy, an Al-Mg-based alloy, an Al-Mg-Si-based alloy, and an Al-Zn-Mg-based alloy.

4. The Al-ND-based composite material according to any one of claims 1 to 3, wherein an average size of primary particles of the ND particles is from 2 to 70 nm.

5. The Al-ND-based composite material according to any one of claims 1 to 4, wherein a proportion of the ND particles in the composite material is from 0.1 to 30 mass%.

6. The Al-ND-based composite material according to any one of claims 1 to 5, wherein the nanodiamond particles are detonation nanodiamond (DND) particles.

## Amended claims

### Amended claims under Art. 19.1 PCT

1. (Amended) An Al-ND-based composite material in which diamond particles are dispersed in an aluminum (Al)-based metal matrix, wherein
the Al-based metal matrix is a pure Al matrix or an Al-based alloy matrix,
the diamond particles include nanodiamond (ND) particles,
a proportion of the ND particles is from 1 to 30 mass%,
an average size of primary particles of the ND particles is from 2 to 70 nm, and
the Al-ND-based composite material is a sintered compact or a solution-treated material.

2. (Canceled)

3. (Amended) The Al-ND-based composite material according to claim 1, wherein an Al-based alloy is selected from the group consisting of an Al-Cu-Mg-based alloy, an Al-Mn-based alloy, an Al-Si-based alloy, an Al-Mg-based alloy, an Al-Mg-Si-based alloy, and an Al-Zn-Mg-based alloy.

4. (Canceled)

5. (Canceled)

6. (Amended) The Al-ND-based composite material according to claim 1 or 3, wherein the nanodiamond particles are detonation nanodiamond (DND) particles.

7. (New) The Al-ND-based composite material according to claim 1, wherein
the Al-ND-based composite material is a sintered compact.

8. (New) The Al-ND-based composite material according to claim 1, wherein
the Al-ND-based composite material has a lamellar microstructure.

9. (New) The Al-ND-based composite material according to claim 1, wherein
the aluminum (Al)-based metal matrix includes aluminum (Al) metal powders, and the ND particle is incorporated into a particle of the aluminum (Al) metal powders.

10. (New) The Al-ND-based composite material according to claim 1, wherein
the ND particles are dispersed uniformly in the Al-based metal matrix.
